# EUROPEAN PATENT SPECIFICATION

(11) **EP 0 352 842 B1**
(45) Date of publication and mention of the grant of the patent: **20.01.1993**
(21) Application number: 89201846.6
(22) Date of filing: 12.07.1989
(51) Int. Cl.: A23F 5/26, A23F 5/50

(54) **Process for extracting coffee**
Verfahren zur Extraktion von Kaffee
Procédé d'extraction de café

(30) Priority: 13.07.1988 NL 8801775; 06.02.1989 NL 8900285
(43) Date of publication of application: 31.01.1990
(73) Proprietor: Douwe Egberts Koninklijke Tabaksfabriek- Koffiebranderijen-Theehandel N.V., 3532 AA Utrecht (NL)
(72) Inventor: Hellemons, Adrianus Cornelis Maria, NL-3417 HW Montfoort (NL)
(74) Representative: Smulders, Theodorus A.H.J., Ir.

(56) References cited:
- EP-A- 0 097 466
- CA-A- 980 165
- FR-A- 1 162 479
- NL-A- 6 803 767

## Description

This invention relates to a process for preparing an extract from ground, roasted coffee, which comprises preparing a primary extract by exhaustive primary extraction with water or an aqueous solution in one or more extraction cells including one cell to which extraction liquid is supplied; and subsequently preparing a secondary extract by secondary extraction with water or an aqueous solution in one or more extraction cells including one cell from which secondary extract is withdrawn; the process being conducted so that when the primary extraction cell to which the water or the aqueous solution is supplied has been exhaustively extracted, this cell is connected to the secondary extraction as the extraction cell from which secondary extract is withdrawn.

In the extraction of coffee for the preparation of instant coffee or coffee concentrate, two separate extraction stages are distinguished, namely, the primary extraction and the secondary extraction.

Primary extraction is generally carried out at a temperature maximally equal to the boiling point of water at atmospheric pressure. Under these conditions, only those components which are directly soluble in water are extracted from the coffee. Such an extraction corresponds approximately to the method used in making coffee at home. In such a method, using a very finely-ground coffee, a high water/coffee ratio (> 15) and an extraction time of about 10 minutes, a coffee extract is obtained which is very good in quality. From the point of view of quality, this is the optimum manner of preparing coffee extract. However, on an industrial scale, this manner of preparation is not economically justified owing to the low efficiency (< 30%).

In order to obtain a sufficiently high extraction efficiency in the extract, in industrial coffee extraction for the preparation of instant coffee or coffee concentrate, a secondary extraction is used as well. The coffee exhaustively extracted in the primary extraction is subjected to such conditions that a portion of the originally insoluble solid in the coffee is hydrolyzed to form soluble components which are then extracted in the secondary extraction. Conventional temperatures for this secondary extraction range between 120 and 190°C. Such extractions are generally carried out in a battery consisting of a plurality of series-connected extraction cells.

When such a coffee extract preparation is compared with the domestic way of making coffee, the following differences are noted:
1. The efficiency of the primary extraction is considerably lower. The reasons for this are:
   aa. The use of large particles to minimize pressure drop in the cells.
   bb. The use of a low draw-off factor, as a result of which a relatively low amount of hydrophobic aroma compounds are extracted. The presence of sufficient hydrophobic aroma compounds in an extract is of great importance to produce a flavor that is comparable to coffee made in the domestic way.
   cc. The primary section is fed with an extraction liquid which already contains extracted material from the secondary section. As a consequence, the extraction in the primary section is much less efficient.
2. In the secondary extraction, an amount of secondary material (extracted solids) is extracted in a proportion approximately equal to the proportion of primary material. This secondary material adversely affects the quality of the extract owing to the presence of off-flavors. However, from the point of view of economy, it is necessary to use the secondary solids.
3. The residence time of the coffee and the extract in the extraction battery is extremely long. In combination with the conditions used, this leads to a deterioration in quality, which is manifested in the taste of the coffee made from the extract.

Part of these drawbacks can be overcome by using so-called split extraction. In the split-extraction technique, the primary and the secondary extractions are fed with an extraction liquid independently of each other, so that a primary and a secondary extract are obtained separately from each other. An example of such a process is described in German Offenlegungsschrift 27 41 524. In accordance with that process, the coffee in first exhaustively extracted in a primary extraction, subsequently heated in the absence of extraction liquid, and finally extracted further in a secondary extraction. The extracts thus obtained are then concentrated and mixed with each other. In this way, a clearly improved extract quality was obtained relative to split extraction without intermediate heating.

Methods for the split extraction of coffee have also been described in a number of other patent publications. In this connection reference can be made, by way of example, to US-A-3 790 689, US-A-3-810 766, EP-A-90 562, EP-A-97 466 and EP-A-159 754. The processes described in these publications, however, all have the disadvantage that rather a low draw-off factor is used, so that a relatively small amount of hydrophobic aroma components is extracted, with all adverse results of that. An additional consequence is that no exhaustive extraction is obtained in the primary section, so that a part of the primary components is exposed to the adverse effect of high temperature in the secondary section.

Canadian patent 980 165 discloses a process for the extraction of coffee in which the secondary extract is split into a product stream and a feed stream, which feed stream is used as an extraction liquid for the primary extraction.

In accordance with the present invention there is provided a process for preparing an extract from ground, roasted coffee, which comprises
- preparing a primary extract by exhaustive primary extraction with water or an aqueous solution in one or more extraction cells including one cell to which extraction liquid is supplied; and
- subsequently preparing a secondary extract by secondary extraction with water or an aqueous solution in one or more extraction cells including one cell from which secondary extract is withdrawn;
   the process being conducted so that when the primary extraction cell to which the water or the aqueous solution is supplied has been exhaustively extracted, this cell is connected through to the secondary extraction as an extraction cell from which secondary extract is withdrawn;
which process is characterized in that the first quantity of extract from the cell connected through, which quantity corresponds approximately with the liquid contents of said cell, is supplied to the primary extraction as an extraction liquid.

It has surprisingly been found that this process is productive of a coffee extract, for example, in the form of a powder or concentrate, which produces a coffee quality that is fairly similar to the quality of coffee made domestically.

An essential feature in the process according to the present invention is that the first draw from the extraction cell, which contains coffee subjected to exhaustive primary extraction and has been connected through to the secondary extraction, is used not as a secondary extract, but as an extraction fluid for the primary extraction. In fact it has been found that if the primary extraction has actually been really exhaustive, the first draw from this cell contains virtually no secondary extract, but is virtually unchanged primary extraction fluid which, at best, contains some primary extract. Accordingly, the use of this fluid in the primary extraction not only improves the economy of the process, but results in a better extract quality.

It is noted that the expression "quantity that corresponds approximately to the liquid contents of the cell" indicates an amount that does not differ more than 25 vol.% from the liquid contents of the cell.

In this connection it is noted that it is known per se to use the contents of the fresh secondary extraction cell as an extraction liquid for the primary extraction. This, however, is always a combination with an extraction method which does not involve exhaustive primary extraction, so that there is no split extraction.

For the primary extraction, the draw-off factors used according to the present invention preferably range between 3 and 20. These values result in a primary extract having an optimum taste, while the dry solids concentration in the primary extract is still sufficiently high for concentrating the extract in an economic manner.

The draw-off factor used in the secondary extraction preferably ranges between 1 and 5. This draw-off factor is determined mainly by the aim to produce as much secondary extract as possible with as high a dry-solids content as possible.

In this connection the term "draw-off factor" means the ratio by weight of the extract withdrawn from the system and the amount of coffee supplied to the system.

The extracts obtained in the manner described above are preferably concentrated further. Preferably, the concentration of the primary extract is carried out under conditions in which the aroma components are substantially maintained or are recovered. Most processes for concentrating coffee extract employ a form of evaporation for the removal of the large amounts of water from the extract. It is generally known, however, that evaporation is generally accompanied with the undesirable removal or loss of a number of aroma components. The result is an undesirable loss in quality. To overcome this problem, a number of processes have been developed, aiming at retaining the flavour components to a greater or lesser extent. Examples are stripping and collecting the aroma components prior to the evaporation of water, or the use of reverse osmosis. According to the present invention, however, freeze concentration is preferred. Such a process is described, for example, in GB-A-2 023 564 and GB-A- 2 082 081.

Reverse osmosis also gives a high aroma retention. A notorious problem was, however, that the membrane was greatly fouled. When composite membranes are used, however, as marketed for example by Stork/Wafilin, this technique can also be used on an industrial scale. A description of the use of reverse osmosis is given in NL-A-6803767.

In accordance with a preferred embodiment of the present invention, the water obtained during freeze concentration or reverse osmosis is used as water of extraction.

In accordance with another embodiment of the invention, more conventional methods are used for the concentration of the extract. One such method is the stripping of the extract with steam, followed by the concentration of the extract by the evaporation of water. Steam stripping will remove a large part of the aroma components. These aroma components are subsequently condensed and can be re-added to the concentrated extract later. The aroma components remaining behind in the stripped extract are generally removed completely or substantially completely during evaporation. Accordingly, in the process described above, aroma retention is less than when freeze concentration or reverse osmosis is used, for example.

The secondary extract is preferably concentrated under such conditions that aroma components which may be present in the extract are removed. As the components in question are particularly aroma components which may have an adverse effect on the quality of the extract, such a method of concentration has the advantage that the quality of the total extract is improved.

Evaporation is a preferred method in this connection, as such a method is most attractive economically.

The extracts thus obtained are subsequently mixed and brought into a form suitable for use and sale. When it is the intention for the extract to be processed to form an instant powder, the extract can be spray dried or freeze dried. When used in the form of a concentrate, the extract is preferably frozen, in which form it can be stored for a long time and can be defrosted shortly before use.

The process according to the invention can in principle be carried out in known per se equipment. More specifically, a battery extractor is used for the extraction, which is based on the use of a plurality of extraction cells. The primary extraction is generally carried out in at least two extraction cells, more in particular in three or four cells. The extraction is generally effected in such a manner that the fresh coffee is introduced into the first primary extraction cell, that is to say, the extraction cell from which the extract is drawn. To the last extraction cell, fresh water or an aqueous solution is supplied as an extraction liquid. The last extraction cell contains coffee that has been largely extracted. The extract from the last cell is supplied to the last extraction cell but one as an extraction liquid; subsequently, the extract from that cell is again supplied to the next cell, until the first cell is reached.

When the last extraction cell has been exhaustively extracted, that is to say, that the liquid leaving the cell does not deviate appreciably from the liquid supplied, this cell is connected through to the secondary extraction. This can be effected at any desired moment during the extraction cycle but is preferably done halfway. A new cell is connected as a first extraction cell as the beginning of a cycle, which new cell contains fresh coffee. This means that, during a portion of the cycle, the extraction may comprise one cell more than the number of cells indicated.

In this connection the term cycle is defined as the period which begins with the connection of a cylinder or cell with fresh coffee and ends at the moment when the desired amount of extract has been drawn off and a new cylinder or cell with fresh coffee is connected.

The cell originally connected as the first secondary extraction cell is connected through and now functions as the second secondary extraction cell. The other cells are connected through in a similar manner. During this operation, the feed of the extraction liquid is displaced one cell. The secondary extraction cell that was originally the last is taken off-stream and emptied so that it may be re-filled with fresh coffee as a later stage.

The embodiment described above is not based on the use of a specific number of primary extraction cells; it is clear, however, that the use of any given number of cells is possible.

The process according to the present invention permits using different extractors from battery extractors. The only essential feature in this connection is that the liquid contents of the extraction unit connected through from the primary extraction to the secondary extraction is not used as a secondary extract, but is supplied to the primary extraction as an extraction fluid. Suitable types of extractors are well known to those skilled in the art.

The coffee used in the process according to the invention is the usual roasted and ground coffee. In connection with the tolerable pressure drop in the equipment, however, the coffee is less finely ground than is conventional for domestic use. As well known to those skilled in the art, a rather coarsely ground coffee is more conventional for the extraction of coffee on an industrial scale.

The present invention also relates to a coffee extract obtained using the process according to the invention. This coffee extract may be in the form of powder which can be mixed with water to form coffee, but it may alternatively have the form of a concentrated liquid, which liquid can be marketed, if desired in deep-frozen form. Such a concentrate can then be used with advantage for quickly providing coffee in large quantities.

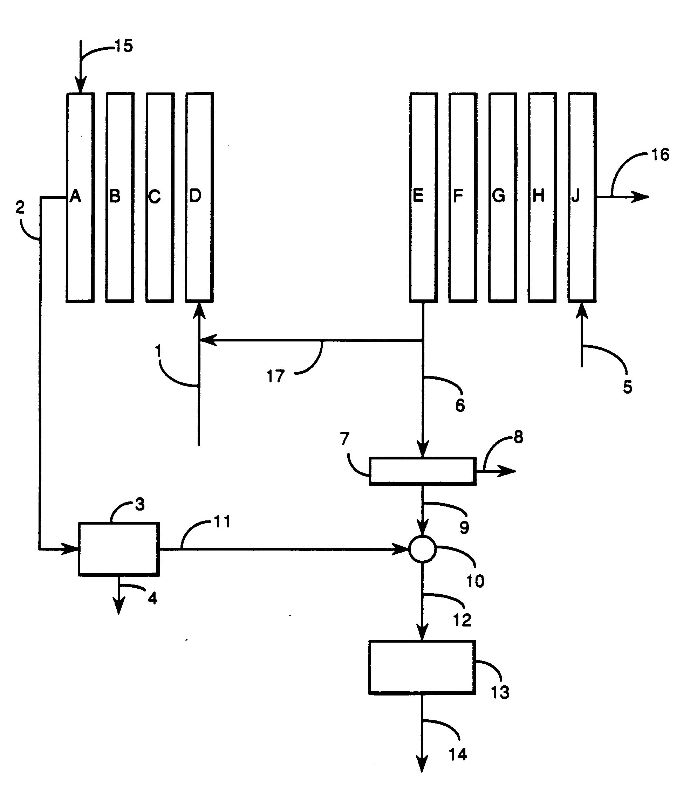

The invention will now be described with reference to the accompanying drawing, which shows a block diagram of one embodiment of the invention.

The accompanying drawing illustrates an embodiment of the invention in which the concentration of the primary extract is effected by means of freeze concentration, and the concentration of the secondary extract is effected in a conventional manner, namely, by the evaporation of water.

In the figure, the letters A-J designate nine extraction cells, with A being the primary extraction cell which contains the least extracted coffee, and from which the extract is drawn off. D is the fourth primary extraction cell. The present case is based on a primary extraction carried out in four separate cells. As indicated before, it is within the scope of the present invention to use one to three cells, or, conversely, five or more cells. The secondary extraction is carried out in cells E-J.

The extraction is carried out in cycles. During one cycle, fresh extraction liquid is supplied to cell D through line 1. Through lines not shown connecting the cells with each other, the extract from cell D is supplied to cell C, etc. In the end, the primary extract is drawn off from cell A and supplied through line 2 to freeze concentration unit 3. Through line 4, substantially water is discharged from freeze concentration unit 3.

Separately from the primary extraction, the secondary extraction is carried out in cells E-J. Cell E contains the coffee that has been exhaustively subjected to primary extraction. The coffee present in cells F-J has already been partially extracted by secondary extraction. Through line 5, fresh extraction liquid is supplied to cell J. Through conduits not shown, connecting the cells together, extract is passed from cell J to H, and from H to G, etc. The secondary extract is drawn off from cell E and is supplied through line 6 to evaporator 7 in which secondary extract is concentrated through the evaporation of water. This can be effected, for example, by heating, possibly in combination with vacuum. Under these conditions, aroma components still present in the secondary extract are also removed. As these are the very components which have an adverse effect on the taste, such a process has a favourable effect on the quality of the coffee to be made from the extract. Water vapour and aroma components are discharged from evaporator 7 through line 8.

When the extract mixture has been concentrated, it is supplied through line 9 to mixer 10, where it is mixed with concentrated primary extract supplied through line 11 from unit 3. The mixture is supplied through line 12 to unit 13. In unit 13, the extract is converted into its final form, for example, into a deep-frozen extract, or into powder by freeze drying.

In the course of the extraction, a fresh cell (A′) not shown, containing fresh coffee, is connected to the battery, with which a new cycle begins. In the figure, this is indicated by line 15, through which, as it were, fresh, ground coffee is supplied. When the coffee in cell D has been exhaustively extracted, this cell is connected through to the secondary extraction in the course of the cycle. Cell C then becomes the primary extraction cell to which fresh extraction fluid is supplied.

Cell D then becomes the first secondary extraction cell, while the last secondary cell is taken off-stream and the coffee grounds present therein are thrown away. This is indicated by line 16.

When the last primary cell has been connected through to the secondary extraction, according to the invention, the first amount of extract from the new secondary extraction cell is not passed to evaporator 7 but this fluid, which in practice contains no, or substantially no, solids extracted in the secondary extraction, is passed through line 17 to cell D. When an amount of liquid corresponding to the liquid contents of the cell has been drawn off from cell E, the tap is switched and the extract is supplied to evaporator 7.

The invention is illustrated in and by the following example, which is given by way of illustration only and should not be construed to limit the invention in any way.

### Example

Using apparatus as shown in the figure, ground coffee was extracted in a diffusion battery. Using four primary extraction cylinders and five cylinders for the secondary extraction, each with an amount of coffee of about 250 kg, and using an average cycle period of 45 min, coffee extract was prepared continuously.

In the primary extraction, the ground coffee was extracted using water having a temperature of about 90°C and a draw-off factor of about 4. The feed of extraction liquid (water) was 1620 kg per cycle, the first 430 kg of which came from the first secondary extraction cylinder. The solids contents of the primary extract was 6.25%, and the extraction efficiency was about 25%.

The secondary extraction was carried out using water of 172°C and a draw-off factor of 3. The efficiency in the secondary extraction was 20% while the solids contents in the secondary extract was 6.7%.

It is noted that a back-pressure valve was included in the draw-off conduits of both extraction units to prevent the extracts from starting to boil, which is undesirable in connection with de-gassing and the like.

The primary extract was supplied to a freeze concentration unit comprising a crystallizer and a washing column. With a feed of 1333 kg/h, an amount of concentrate of 208 kg/h was obtained, with a dry content of about 40%. The secondary extract was concentrated by evaporation, which produced a quantity of 168 kg/h with a dry content of about 40%.

The concentrated extracts thus obtained were mixed, so that an extract stream of 376 kg/h was obtained with a dry content of about 40% by weight. The extract thus obtained was freeze dried, which produced about 150 kg/h of instant coffee powder.

A panel of coffee quality experts rated the product thus obtained as of very good quality and considerably superior to the conventional commercial products. Analytically, too, the product was shown to contain a considerably larger amount of aroma components than the other products referred to.

## Claims

1. A process for preparing an extract from ground, roasted coffee, which comprises
- preparing a primary extract by exhaustive primary extraction with water or an aqueous solution in one or more extraction cells including one cell to which extraction liquid is supplied; and
- subsequently preparing a secondary extract by secondary extraction with water or an aqueous solution in one or more extraction cells including one cell from which secondary extract is drawn off;
the process being conducted so that when the primary extraction cell to which the water or the aqueous solution is supplied has been exhaustively extracted, this cell is connected through to the secondary extraction as an extraction cell from which secondary extract is withdrawn,
characterized in that the first quantity of extract from the cell connected through, which quantity corresponds approximately to the liquid contents of said cell, is supplied to the primary extraction as an extraction liquid.

2. A process as claimed in claim 1, characterized in that the water-to-coffee ratio used in the primary extraction ranges from about 3 to about 20.

3. A process as claimed in claim 1 or 2, characterized in that the primary extract is concentrated under conditions in which the aroma components are substantially maintained or recovered.

4. A process as claimed in claim 3, characterized in that the primary extract is concentrated, using freeze concentration or reverse osmosis.

5. A process as claimed in claim 3, characterized in that the primary extract is concentrated by stripping the aroma components with steam, collecting the stripped aroma components, and concentrating the stripped extract by evaporation of water.

6. A process as claimed in any of claims 1-5, characterized in that the primary and the secondary extracts are mixed with each other.

7. A process as claimed in claim 6, characterized in that the resulting mixture is deep frozen.

8. A process as claimed in claim 6, characterized in that the mixture is processed to form a powder.

9. A process as claimed in claim 8, characterized in that the mixture is processed to form powder by means of spray drying or freeze drying.

10. A process as claimed in any of claims 1-9, characterized in that the primary extraction is carried out in an extraction battery comprising at least two cells, with the primary extract being drawn off from one cell, namely that containing the fresh coffee.

11. A process as claimed in any of claims 1-10, characterized in that the secondary extraction is carried out in an extraction battery comprising at least two cells, with water or an aqueous solution for the secondary extraction being supplied to one cell, namely, the more or most exhausted cell.

12. A process as claimed in any of claims 1-11, characterized in that the primary extraction is carried out at a temperature of 80-100°C.

13. A process as claimed in any of claims 1-12, characterized in that the secondary extraction is carried out at a temperature of 120-165°C.

14. A coffee extract obtained by the process as claimed in any of claims 1-13.

## Patentansprüche

1. Verfahren zur Herstellung eines Extraktes aus gemahlenem, geröstetem Kaffee, bestehend aus
- dem Bereiten eines primären Extraktes durch erschöpfende erste Extraktion mit Wasser oder einer wäßrigen Lösung in einer oder mehreren Extraktionszellen, einschließlich einer Zelle, in die die Extraktionsflüssigkeit eingespeist wird; und
- der nachfolgenden Bereitung eines sekundären Extraktes durch sekundäre Extraktion mit Wasser oder einer wäßrigen Lösung in einer oder mehreren Extraktionszellen, einschließlich einer Zelle, aus der der sekundäre Extrakt abgezogen wird;
wobei das Verfahren so durchgeführt wird, daß, wenn die primäre Extraktionszelle, die mit dem Wasser oder wäßrigen Lösung beaufschlagt wird, erschöpfend extrahiert worden ist, diese Zelle mit der sekundären Extraktion durchverbunden wird als eine Extraktionszelle, aus der der sekundäre Extrakt abgezogen wird,
dadurch gekennzeichnet, daß die erste Menge des Extraktes aus der durchverbundenen Zelle, wobei die Menge annähernd mit den Flüssigkeitsgehalten der Zelle übereinstimmt, in die primäre Extraktion als eine Extraktionsflüssigkeit eingespeist wird.

2. Verfahren nach Anspruch 1, dadurch gekennzeichnet, daß das eingesetzte Wasser-zu-Kaffee-Verhältnis bei der primären Extraktion im Bereich von etwa 3 bis etwa 20 liegt.

3. Verfahren nach Anspruch 2 oder 3, dadurch gekennzeichnet, daß der primäre Extrakt unter Bedingungen konzentriert wird, bei denen die Aromakomponenten im wesentlichen erhalten bleiben oder wiedergewonnen werden.

4. Verfahren nach Anspruch 3, dadurch gekennzeichnet, daß der primäre Extrakt unter Einsatz der Gefrierkonzentration oder der Umkehrosmose konzentriert wird.

5. Verfahren nach Anspruch 3, dadurch gekennzeichnet, daß der primäre Extrakt konzentriert wird durch Strippen der Aromakomponenten mit Dampf, Vereinigen der abgestrippten Aromakomponenten und Konzentrieren des abgestrippten Extraktes durch Verdampfen des Wassers.

6. Verfahren nach einem der Ansprüche 1 bis 5, dadurch gekennzeichnet, daß der primäre und der sekundäre Extrakt miteinander vermischt werden.

7. Verfahren nach Anspruch 6, dadurch gekennzeichnet, daß das erhaltene Gemisch tiefgefroren wird.

8. Verfahren nach Anspruch 6, dadurch gekennzeichnet, daß das Gemisch in Form eines Pulvers verarbeitet wird.

9. Verfahren nach Anspruch 8, dadurch gekennzeichnet, daß das Gemisch mittels Sprühtrocknung oder Gefriertrocknung verarbeitet wird, um ein Pulver zu bilden.

10. Verfahren nach einem der Ansprüche 1 bis 9, dadurch gekennzeichnet, daß die primäre Extraktion in einer Extraktionsbatterie durchgeführt wird, bestehend aus wenigstens zwei Zellen, wobei der primäre Extrakt aus einer Zelle abgezogen wird, nämlich aus der den frischen Kaffee enthaltenden.

11. Verfahren nach einem der Ansprüche 1 bis 10, dadurch gekennzeichnet, daß die sekundäre Extraktion in einer Extraktionsbatterie durchgeführt wird, bestehend aus wenigstens zwei Zellen, wobei Wasser oder eine wäßrige Lösung für die sekundäre Extraktion in eine Zelle eingespeist wird, nämlich in die mehr oder am meisten erschöpfte Zelle.

12. Verfahren nach einem der Ansprüche 1 bis 11, dadurch gekennzeichnet, daß die primäre Extraktion bei einer Temperatur von 80 bis 100 °C durchgeführt wird.

13. Verfahren nach einem der Ansprüche 1 bis 12, dadurch gekennzeichnet, daß die sekundäre Extraktion bei einer Temperatur von 120 bis 165 °C durchgeführt wird.

14. Kaffee-Extrakt, erhältlich durch das in einem der Ansprüche 1 bis 13 beanspruchte Verfahren.

## Revendications

1. Procédé pour préparer un extrait à partir de café moulu et grillé, qui comprend
- la préparation d'un extrait primaire par extraction primaire complète avec de l'eau ou une solution aqueuse dans une ou plusieurs cellules d'extraction comprenant une cellule à laquelle un liquide d'extraction est envoyé; et
- la préparation ultérieure d'un extrait secondaire au moyen d'une extraction secondaire avec de l'eau ou une solution aqueuse dans une ou plusieurs cellules d'extraction comprenant une cellule d'où l'extrait secondaire est soutiré;
le procédé étant exécuté de telle sorte que, lorsque la cellule d'extraction primaire, à laquelle l'eau ou la solution aqueuse envoyée a été extraite complètement, cette cellule est raccordée pour l'extraction secondaire en tant que cellule d'extraction, d'où l'extrait secondaire est soutiré,
caractérisé en ce que la première quantité du produit extrait de la cellule raccordée, quantité qui correspond approximativement au contenu liquide de ladite cellule, est envoyé en tant que liquide d'extraction pour l'extraction primaire.

2. Procédé selon la revendication 1, caractérisé en ce que le rapport eau-café utilisé dans l'extraction primaire s'étage entre environ 3 et environ 20.

3. Procédé selon la revendication 1 ou 2, caractérisé en ce que l'extrait primaire est concentré dans des conditions dans lesquelles les composants aromatiques sont sensiblement maintenus ou récupérés.

4. Procédé selon la revendication 3, caractérisé en ce qu'on concentre l'extrait primaire moyennant l'utilisation d'une opération de concentration par congélation ou d'une osmose inverse.

5. Procédé selon la revendication 3, caractérisé en ce qu'on concentre l'extrait primaire par un prélèvement des composants aromatiques avec de la vapeur, collecte des composants aromatiques prélevés et concentration de l'extrait prélevé par évaporation d'eau.

6. Procédé selon l'une quelconque des revendications 1-5, caractérisé en ce qu'on mélange l'extrait primaire et l'extrait secondaire.

7. Procédé selon la revendication 6, caractérisé en ce que l'on applique une congélation intense au mélange obtenu.

8. Procédé selon la revendication 6, caractérisé en ce qu'on traite le mélange de manière à former une poudre.

9. Procédé selon la revendication 8, caractérisé en ce qu'on traite le mélange de manière à former une poudre au moyen d'un séchage par pulvérisation ou d'un séchage par congélation.

10. Procédé selon l'une quelconque des revendications 1-9, caractérisé en ce que l'extraction primaire est exécutée dans une batterie d'extraction comprenant au moins deux cellules, l'extrait primaire étant soutiré d'une cellule, à savoir celle contenant le café frais.

11. Procédé selon l'une quelconque des revendications 1-10, caractérisé en ce que l'extraction secondaire est exécutée dans une batterie d'extraction comprenant au moins deux cellules, de l'eau ou une solution aqueuse pour l'extraction secondaire étant envoyée à une cellule, à savoir la cellule plus épuisée ou la plus épuisée.

12. Procédé selon l'une quelconque des revendications 1-11, caractérisé en ce qu'on exécute l'extraction primaire à une température de 80-100°C.

13. Procédé selon l'une quelconque des revendications 1-12, caractérisé en ce qu'on exécute l'extraction secondaire à une température de 120-165°C.

14. Extrait de café pouvant être obtenu au moyen du procédé revendiqué selon l'une quelconque des revendications 1-13.
